Europäisches Patentamt

European Patent Office

Office européen des brevets

(19)

(11) Publication number: **0 286 358 B1**

(12) **EUROPEAN PATENT SPECIFICATION**

(45) Date of publication of patent specification: **26.08.92**

(21) Application number: **88303022.3**

(22) Date of filing: **05.04.88**

(51) Int. Cl.⁵: **G21F 9/00**, G21F 9/18, G21F 9/30

(54) **Procedure for treating low activity organic wastes from nuclear power plants with the aid of anaerobic fermentation.**

(30) Priority: **08.04.87 FI 871550**

(43) Date of publication of application:
**12.10.88 Bulletin 88/41**

(45) Publication of the grant of the patent:
**26.08.92 Bulletin 92/35**

(84) Designated Contracting States:
**BE CH DE FR GB IT LI NL SE**

(56) References cited:
**EP-A- 0 192 879**
**DE-A- 3 529 461**
**DE-C- 2 930 812**
**GB-A- 2 050 682**

(73) Proprietor: **IMATRAN VOIMA OY**
**Malminkatu 16**
**SF-00100 Helsinki 10(FI)**

(72) Inventor: **Tusa, Esko**
**Kirkkotie 25C**
**02700 Kauniainen(FI)**
Inventor: **Maatta, Raimo**
**Pohjoisranta 14A 22**
**00170 Helsinki(FI)**
Inventor: **Ruuskanen,Antti**
**Tuomaantie 32D**
**04200 Kerava(FI)**

(74) Representative: **Clifford, Frederick Alan et al**
**MARKS & CLERK 57/60 Lincoln's Inn Fields**
**London WC2A 3LS(GB)**

**Description**

The present invention concerns a procedure for treating low activity wastes from nuclear power plants with the aid of anaerobic fermentation.

The document DE-A-2 930 812 discloses a process for purifying organic waste in an aqueous medium. The apparatus comprises two successive bioreactors, each containing a porous inorganic support which is suitable for the accumulation of biomass.

In a nuclear power plant area various wastes are produced, part of which are radioactive. The wastes have not been classified by activity; all of them are counted as being so-called low activity wastes. The greater part consists of paper or other organic material. Table 1 states the composition of the low activity wastes of IVO (the power company Imatran Voima Osakeyhtiö). Different principles have been applied in classifying the wastes of TVO (the power company Teollisuuden Voima Osakeyhtiö), as can be seen in Table 2.

**Table 1.** Composition of the low activity waste accruing in the nuclear power plant of IVO.

| Type of waste | Quantity (kg per annum) |
| --- | --- |
| Paper | 7500 |
| Miscellaneous rag goods | 1500 |
| Plastics and rubber | 700 |
| Timber and wood | 300 |
| Total | 10000 |

**Table 2.** Composition of the low activity waste accruing in the nuclear power plant of TVO.

| Type of waste | Quantity (kg per annum) |
| --- | --- |
| Paper/cardboard/wood | 4000 |
| Machine towels/cotton gloves/ overalls | 4000 |
| Fireproofed fabric | 2000 |
| Plastics and rubber | 10000 |
| Total | 20000 |

For the time being, the wastes have been placed in barrels of about 200 litres capacity. Assuming one barrel to hold 50 kg, the annual waste quantity, expressed in barrels, will be 200 barrels at IVO and 400 at TVO. At the moment both nuclear power plants in aggregate have about 6000 barrels of low activity wastes in storage.

The original plans envisioned ultimate disposition of said wastes in spaces blasted out from bedrock. This is an expensive solution, and it may later give rise to various detriments. The organic material begins to decompose in the course of decades, producing various gaseous substances. The report "The gas production due to microbiological activity in the VLJ ultimate disposal facilities, Report YJT-84-16"

2

estimates the quantity of gas formed to be several ten cubic metres per annum during about 100 years.

The object of the invention is to provide a procedure which enables low activity organic wastes from nuclear power plants to be treated so that the volume of the waste that has to be ultimately disposed can be substantially reduced.

The aims of the invention are attained by a procedure which is mainly characterized in that

(a) the wastte is subjected to desired pretreatment, such as comminution and suspending, or to a special treatment, such as hydrolysis and/or physical dispersion, such as irradiation, heat treatment or equivalent,

(b) the pretreated waste is conducted into a bioreactor in which anaerobic decomposition takes place in two steps, the first step being an acid step and the second, a methane step,

(c) the gases produced in the decomposition process are conducted from the methane step to gas burning, and

(d) the undecomposed waste is removed from the process to concentration and is packed in barrels or equivalent.

Numerous significant advantages are gained with the procedure and the bioreactor of the invention. The volume of the waste that is being treated can be reduced even down to 5 to 10% of the original quantity of waste packed in barrels. The waste that has to be ultimately disposed is converted into stable state, whereby there can for instance be no detrimental gas formation. The process of the invention is comparatively fast, and it is effective on most of the waste fractions. The process of the invention is a closed process and therefore creates no environmental detriments.

Thanks to the procedure of the invention, a variety of wastes can be treated, in other words a wide range from readily decomposable waste to waste which is refractory to decomposition. In the process of the invention various pretreating methods can be applied, including grinding and suspending, hydrolysis or chemical cleaving or initial decomposition, physical decomposition, such as ultraviolet light, irradiation, heat treatment by heating or by refrigeration. In that procedure of the invention, chemicals required in the process are added if needed; these include e.g. pH adjusting chemicals, nutrient salts, trace substances and thickening substances, which are used in the final concentration of the waste.

The gas produced in the process of the invention may be used towards maintaining the process temperature. The procedure of the invention can be carried out within a wide temperature range, usually in the range from 5 to 65°C. However, the temperature range which is most advantageous and most recommendable in view of energy economy is that of about 20 to 35°C. It is obvious that the process can be made faster in a higher temperature range.

The appropriate dry matter content in the process is 5 to 10%. The process of the invention requires replacement water only about 1% of the waste quantity that is being treated. The process of the invention nay be further enhanced by developing a bacterial strain which is maximally suited for use in the process.

The decomposition process of the invention may be subdivided into two, three or more blocks. If this is done, the wastes which are very difficult to decompose will be decomposed in the first block, such as resin for instance, in the second block the treatment will be directed on readily decomposed wastes, such as paper, wood, cotton, cardboard, wool, etc. for instance. The bioreactor is in that case provided with partitions which divide the bioreactor into individual blocks. The volumetric capacity of each block is selected in accordance with the time the material has to spend in it, in other words in accordance with the rate of decomposition.

The invention is described in detail, referring to certain advantageous embodiments of the invention, presented in the figures of the drawings attached, yet to which the invention is not meant to be exclusively confined.

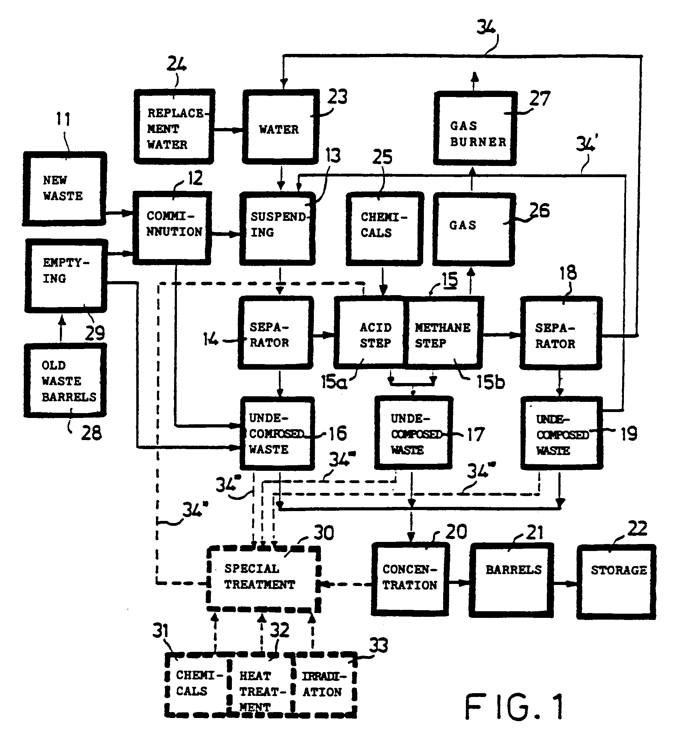

Fig. 1 presents certain advantageous embodiments of the procedure of the invention, in the form of a schematical block diagram.

The procedure of the invention comprises the following partial processes, which are apparent in Fig. 1. The first partial process is waste gathering and emptying of the waste barrels. In Fig. 1, new waste is indicated by the block 1, old waste barrels are represented by block 28 and barrel emptying, by block 29. The next partial process is comminution of the waste, indicated by block 12 in Fig. 1. The next partial process is suspending the comminuted waste, this being indicated by block 13 in Fig. 1. The suspended waste is conducted to a separator 14, whence the decomposable waste is conducted to a bioreactor 15 according to the invention. In the bioreactor 15, anaerobic decomposition takes place in two steps, the first step being an acid step 15a and the second, a methane step 15b. The undecomposed waste is removed from the separator 14 to block 16, as can be seen in Fig. 1. From the bioreactor 15, the undecomposed waste is conducted to block 17, and the anaerobically decomposed waste is conducted to the separator 18, where separation of undecomposed matter and water takes place. The undecomposed waste is conducted to block 19 and the water is returned by a circulation line 34 to the water tank 23. Replacement water is conducted from block 24 to block 23. The undecomposed waste that has been removed from the process is conducted from blocks 16, 17 and 19 to concentration 20, whence the further treated waste is packed in barrels 21, which are conveyed to storage 22. From the block 25 chemicals are added into the bioreactor 15. From the methane step 15b of the bioreactor 15, the gases which have been produced are conducted to block 26, and further to gas burning 27.

The process of the invention may also comprise special treatments, which have been indicated as block 30 in Fig. 1. The waste may in that case be treated with chemicals, block 31, by heat treatment, block 32, and with ultraviolet radiation, block 33.

In the acid step 15a and/or the methane step 15b of the bioreactor chemicals required in the decomposition process are added, such as nutrient salts, trace substances, pH regulating agents, thickening agents, and the like. For nutrient salts, nitrogen and phosphorus compounds are advantageously used, for trace substances, advantageously cobalt, nickel or molybdenum, and for thickening agent, advantageously flocculants.

As can be seen in fig. 1,the undecomposed waste may be circulated by the line 34' back to the bioreactor 15. If desired, the undecomposed waste may be conducted from blocks 16, 17, and 19 by lines 34" to a special treatment 30, where the undecomposed waste is subjected to special treatment with the aid of hydrolysis and/or physical dispersion and then returned by the circulation line 34‴ to the bioreactor 15.

## Claims

1. Procedure for treating low-activity waste material from nuclear power plant with the aid of anaerobic fermentation, characterised in that in the procedure
   (a) the waste material (11,28) is subjected to a subdividing pretreatment,
   (b) the pretreated waste is conducted into a biorector (15), where anaerobic decomposition takes place in two steps,the first being an acid step (15a) and the second a methane step (15b),
   (c) the gases produced in the decomposition process are conducted from the methane step (15b) to a gas burn-off (27), and
   (d) undecomposed waste material is removed from the process, concentrated (20) and packed in containers (21).

2. Procedure according to claim 1, characterised in that chemicals required in the decomposition process are added at the acid step (15a) and/or the methane step (15b) of the bioreactor (15).

3. Procedure according to claim 2, characterized in that the said chemicals are nutrient salts in the form of nitrogen or phosphorus compounds and/or contain cobalt, nickel or molybdenum as trace elements; and/or comprise flocculants as a thickening agent.

4. Procedure according to claim 1,2 or 3, characterised in that undecomposed waste material is recirculated by a line (34') so as eventually to arrive in the bioreactor (15).

5. Procedure according to claim 1, 2 or 3, characterised in that undecomposed waste material is treated by hydrolysis and/or physical dispersion and returned by a circulation line (34') to the bioreactor (15).

6. Procedure according to any one of claims 1-5, characterised in that the temperature in the decomposition process is maintained in the range from 5 to 65°C.

7. Procedure according to claim 6, characterised in that the said temperature is from 20 to 35°C.

## Patentansprüche

1. Verfahren zur Behandlung von Abfallstoff niedriger Aktivität aus einem Kernkraftwerk mit Hilfe von anaerober Gärung, dadurch gekennzeichnet, dass bei diesem Verfahren
   (a) der Abfallstoff (11,28) einer Vorbehandlung zu dessen Unterteilung unterzogen wird,
   (b) der vorbehandelte Abfallstoff zu einem Bioreaktor (15) geführt wird, wo eine anaerobe Zersetzung in zwei Schritten stattfindet, wobei der erste Schritt ein Säureschritt (15a) und der zweite ein Methanschritt (15b) ist,
   (c) die beim Zersetzungsprozess erzeugten Gase vom Methanschritt (15b) zu einer Gas-Abbrennstelle (27) geführt werden, und

(d) unzersetzter Abfallstoff vom Prozess entfernt, konzentriert (20) und in Behälter verpackt (21) wird.

2. Verfahren nach Anspruch 1, dadurch gekennzeichnet, dass beim Zersetzungsprozess benötige Chemikalien dem Bioreaktor (15) beim Säureschritt (15a) und/oder beim Methanschritt (15b) zugegeben werden.

3. Verfahren nach Anspruch 2, dadurch gekennzeichnet, dass die genannten Chemikalien Nährsalze in Form von Stickstoff- oder Phosphorverbindungen sind und/oder Cobalt, Nickel oder Molybdän als Spurenelemente enthalten; und/oder Flockungsmittel als Verdickungsmittel umfassen.

4. Verfahren nach Anspruch 1, 2 oder 3, dadurch gekennzeichnet, dass unzersetzter Abfallstoff mittels einer Leitung (34') so rezykliert wird, dass er schliesslich in den Bioreaktor (15) gelangt.

5. Verfahren nach Anspruch 1, 2 oder 3, dadurch gekennzeichnet, dass unzersetzter Abfallstoff durch Hydrolyse und/oder physikalische Dispersion behandelt und durch eine Rezyklierleitung (34') zum Bioreaktor (15) zurückgeführt wird.

6. Verfahren nach einem der Ansprüche 1 bis 5, dadurch gekennzeichnet, dass die Temperatur beim Zersetzungsprozess im Bereich von 5 bis 65°C gehalten wird.

7. Verfahren nach Anspruch 6, dadurch gekennzeichnet, dass die genannte Temperatur zwischen 20 und 35°C beträgt.

**Revendications**

1. Procédé pour le traitement de déchets à faible radioactivité provenant de centrales nucléaires l'aide de la fermentation anaérobie, caractérisé en ce que dans le procédé

(a) les déchets (11, 28) sont soumis à un prétraitement de subdivision,

(b) les déchets prétraités sont amenés dans un bioréacteur (15) où s'effectue la décomposition anaréobie en deux étapes, la première étant une étape acide 15a et la seconde étant une étape méthane 15b,

(c) les gaz produits au cours de la décomposition sont amenés depuis l'étape méthane (15b) à la combustion des gaz (27) et

(d) les déchets non décomposés sont enlevés du processus, concentrés (20) et conditionnées dans des conteneurs (21).

2. Procédé selon la revendication 1, caractérisé en ce que les produits chimiques nécessaires pour le procédé de décomposition sont ajoutés à l'étape acide (15a) et/ou à l'étape méthane (15b) du bioréacteur (15).

3. Procédé selon la revendication 2, caractérisé en ce que les produits chimiques sont des sels nutritifs sous forme de composés d'azote ou de phosphore et/ou contiennent du cobalt, du nickel ou du molybdène sous forme d'oligoéléments ; et/ou comprennent des floculants en tant qu'agent d'épaississement.

4. Procédé selon la revendication 1, 2 ou 3, caractérisé en ce que les déchets non décomposés sont remis en circulation par une conduite (34') de façon à aboutir finalement au bioréacteur (15).

5. Procédé selon la revendication 1, 2 ou 3, caractérisé en ce que les déchets non décomposés sont traités par hydrolyse et/ou mise en dispersion physique et envoyés per une conduite de circulation (34') au bioréacteur (15).

6. Procédé selon l'une quelconque des revendications 1 à 5, caractérisé en ce que la température au cours de la décomposition est maintenue dans la plage de 5 à 65°C.

7. Procédé selon la revendication 6, caractérisé en ce que la température va de 20 à 35°C.

FIG. 1